Europäisches Patentamt

European Patent Office

Office européen des brevets

(11) Publication number: **0 199 742**
**B1**

# EUROPEAN PATENT SPECIFICATION

(45) Date of publication of patent specification: **14.09.88**

(21) Application number: **85904631.0**

(22) Date of filing: **26.09.85**

(86) International application number:
**PCT/EP85/00500**

(87) International publication number:
**WO 86/02210 10.04.86 Gazette 86/08**

(51) Int. Cl.⁴: **H 02 G 15/184,**
**H 02 G 15/103**

(54) **JOINT FOR CABLES WITH AN EXTRUDED INSULATION.**

(30) Priority: **28.09.84 IT 2291284**

(43) Date of publication of application:
**05.11.86 Bulletin 86/45**

(45) Publication of the grant of the patent:
**14.09.88 Bulletin 88/37**

(84) Designated Contracting States:
**BE CH DE FR GB LI NL SE**

(56) References cited:
**DE-A-3 142 191**
**FR-A-2 311 436**

**Patents Abstracts of Japan, volume 3, no. 71,**
**(E-118) 20 June 1979, & JP A 5449588**
**(FURUKAWA DENKI KOGYO K.K.) 18 April 1979**

(73) Proprietor: **Società Cavi Pirelli S.p.A.**
**Piazzale Cadorna 5**
**I-20123 Milan (IT)**

(72) Inventor: **PARMIGIANI, Bruno**
**Viale Sarca, 87**
**I-20125 Milan (IT)**
Inventor: **LANFRANCONI, Gianmario**
**Piazza Libertà, 16**
**I-20056 Trezzo d'Adda (Milan) (IT)**

(74) Representative: **Dr. Elisabeth Jung Dr. Jürgen**
**Schirdewahn Dipl.-Ing. Claus Gernhardt**
**P.O. Box 40 14 68 Clemensstrasse 30**
**D-8000 München 40 (DE)**

Courier Press, Leamington Spa, England.

## Description

The present invention refers to a joint for cables having an extruded insulation, provided with a sleeve, and in particular a sleeve of the monolithic type that is fitted upon and tightened over the joined ends of the cables.

The known joints in question have the following structure.

At the extremities of the cables there are—stripped in a staggered way—the conductors, the extruded insulations and the outer semiconductive screens.

The conductors, disposed end-to-end, are reciprocally fixed, for example, through welding, or by means of a compression clamp or the like, and over the jointing zone of the conductors there is disposed a metallic adaptor.

The metallic adaptor is a cylindrical body, having its outer diameter equal to the outer diameter of the cables' insulations.

The bases of the adaptor are in contact with the insulations of the cables, and the adaptor is provided with an inner cavity inside which the fastening between the conductors is enclosed.

A sleeve of the monolithic type, i.e. a sleeve comprising at least one insulating layer and a semiconductive field deflector, embedded into the insulating layer and facing the sleeve cavity, is fitted upon and tightened over the joined ends of the cables.

If each cable foresees a semiconductive layer on its outer surface, then even the monolithic sleeve will have a semiconductive layer on its outer surface. The configuration of the monolithic sleeve is such as to bring the sleeve's outer, semiconductive layer into contact with the outer, semiconductive layers of the two cables.

The already known joints described above have found a relatively satisfactory application for the connections of medium voltage cables and low voltage cables. However, although proposed, they have not till now, yet found any practical application in instances of high voltage cables.

The reason for this is that in high voltages the joints of the type in question are inevitably subject to being perforated, after they have been made to operate for a certain amount of time.

It has been noted that what causes these perforations are infiltrations of air and the origination of small interspaces that through the passage of time become formed between the surface of insulating material of the monolithic sleeve cavity and the outer surface of the cables' insulations.

Such infiltrations of air, as well as the above-mentioned interspace formations, take place mainly owing to the reasons given herebelow.

The cables with extruded insualtions are manufactured by means of a continuous extrusion of the semiconductive layers and of the insulating layer around a conductor.

The above-said extruding operation is followed by the cross-linking of the extruded material and, successive to this, an immediate cooling of the cable is carried out.

Owing to the above-described operations, inside the cables' extruded materials, and particularly, in the cable's extruded insulation, there are originated internal tensions both longitudinally as well as circumferentially, caused by the existing difference between the thermal expansibility of the conductor's metallic material and that of the extruded cross-linked materials.

As a matter of fact, the thermal expansion coefficient of any metallic material (that, as an example, for aluminium is $24 \times 10^{-6}$), is lesser than the thermal expansion coefficient of any plastic material (that, as an example, for a cross-linked polyethylene is $5 \times 10^{-2}$) out of which the insulation of the cable is formed.

This difference, existing between the thermal expansion coefficients, allows for a greater shrinking to be expected on the part of the insulating material, following a sudden cooling which the cable undergoes after its vulcanisation as compared to the shrinking had by the conductor.

However, seeing that there exists a close contact between the conductor and the insulation of a cable, the friction exercised between these is so high that the maximum shrinking possible for the insualting material of the cable, is just what takes place in the conductor.

As a consequence of this, internal tensions arise inside the cable's insulation.

In the joint zone, at each end of the cable, no continuity exists in the insulation, and hence, the tensions that exist here, result as being free to act and to cause longitudinal shrinkings with the passage of time and under the action of the thermal cycles that occur when the joint is working.

Such shrinkings cause the formation of 'detachings' between the ends of the cables' insulations and the bases of the joint's metallic adaptor.

Moreover, in the joint, the monolithic sleeve exercises a compressive action upon the insulations of the cables.

This compressive action, in the presence of detachings taking place between the cables' insulations and the bases of the metallic adaptor, with the passing of time, causes a deformation in the insulations, and a shifting of the material towards the space that is created by said detachings themselves.

This movement of materials causes a reduction in the pressure that is exercised by the sleeve upon the outer cylindrical surface of the cables, with thus lessening the dielectric rigidity of the sleeve-cable interface. Moreover, air and/or water infiltrations are rendered possible inbetween the sleeve and the cables' ends, and also the formation of small voids in the sleeve-cables interface.

Owing to this, the perforations accuring in joints, which are unavoidable in high voltage cables owing to the high electrical tensions existing, are also possible in the joints of medium and low voltage cables.

One aim of the present invention is to improve the reliability of the joints used for the low and medium voltage cables, and moreover, to render their application possible in the case of high voltage cables.

What forms one object of the present invention is a joint for extruded insulation cables, of the type comprising a monolithic sleeve, provided with a semiconductive deflector facing its own through-cavity, fitted and tightened on the cables' insulation ends and on a metallic adaptor interposed between them, said sleeve circumscribing the end-to-end connection of the cable conductors, characterized by the fact that mechanical anchorings underlying and entirely in contact with the deflector of the sleeve, fix the metallic adaptor to the insulations of the cables.

The present invention will be better understood from the following detailed description, made solely by way of non-limiting example, with also referring to the Figures of the attached drawings, wherein:

Fig. 1 shows the longitudinal cross-section of a joint according to the invention.

Fig. 2 shows a perspective view, partially in section, of a detail of the joint of Fig. 1.

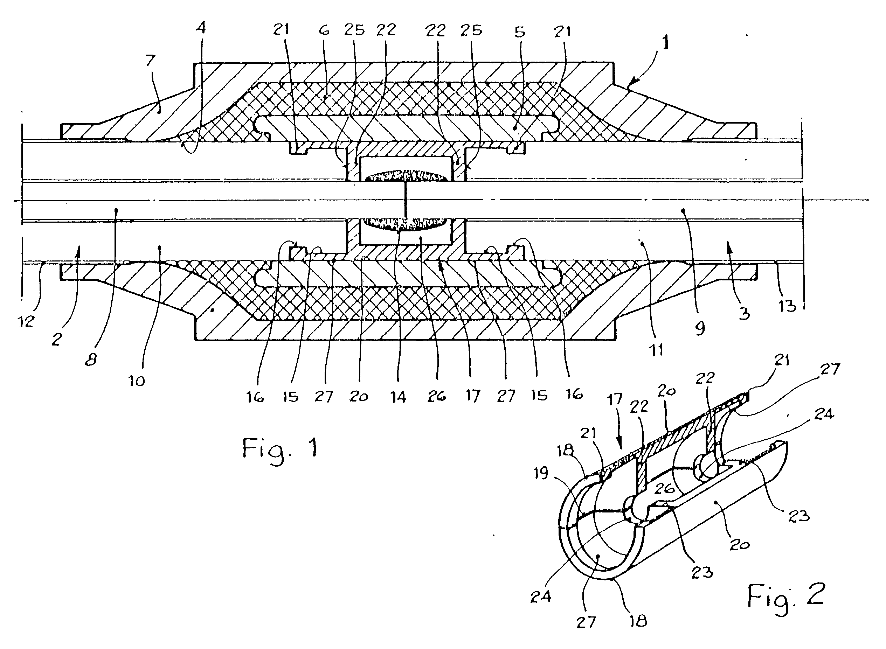

In Fig. 1 there is shown an embodiment of a joint according to the invention.

As can be seen in Fig. 1, the joint presents a monolithic sleeve 1 of the already known type, that is fitted over and tightened upon the ends of two cables 2 and 3 which are connected together.

The monolithic sleeve 1 possesses a through-cavity 4 in whose central position there is a facing semiconductive deflector 5.

The deflector 5 is embedded into an insulating layer 6 that is covered externally with a layer 7 of semiconductive material, by which latter material the extremities of the sleeve 1 are formed and through which the sleeve 1 comes into contact with external semiconductive layers 12 and 13 of the cables 2 and 3.

The extremities of the cables 2 and 3, connected together in the joint, have terminal tracts of conductors 8 and 9 of insulations 10 and 11 and of outer semiconductive layers 12 and 13, stripped in a staggered way.

The conductors 8 and 9 of the cables 2 and 3 are placed in end-to-end contact and are reciprocally connected by a mechanical connection, for example, by a welding 14 or, as an alternative, by a clamp or the like.

In general, the mechanical connection between the conductors 8 and 9 is enclosed in the cavity of a metallic adaptor, and mechanical anchoring means fix the latter to the cables' insulations 10 and 11.

Said mechanical anchoring means, generally comprise at least one mechanically resistant element, cantilevered from the base of the adaptor in its axial direction, embedded into the outer surface of the cables' insulations and said mechanical resistant element is provided with at least one rib which is insertable into a hollow of a complementary form, made in said cables' insulation.

Moreover, the dimensions in the longitudinal direction of the joint of the mechanical anchoring means must be such as to leave them entirely underlying and in contact with the semiconductive material of the deflector 5, which faces the through-cavity 4 of the sleeve 1.

The mechanically resistant element can be formed so as to form a single body with the adaptor, or else separated, but connected or connectable to it.

The mechanically resistant element can assume various configurations for carrying out the action of its being anchored to the cable insulations, and the end tracts of said cable insulations have configurations depending upon those of the mechanically resistant element.

In the embodiment shown in the Figures there is utilized a particular metallic adaptor and mechanically resistant element assembly, and the outer surfaces of the extremities of the cables' insulations 10 and 11 present a lowered tract 15, in correspondence of which there is foreseen an annular hollow 16.

As can be seen in the Figures, and particularly in Fig. 2, the just mentioned 'assembly' is constituted by a tubular cylinder 17 formed by two hollow semicylinders 18, that are joinable to one another along surfaces 19 upon which they are reciprocally fixed by already known means (not shown).

Each hollow semicylinder 18 presents a smooth outer surface 20 that is aligned with the outer surfaces of the cables' insulations 10 and 11.

The inner surface of each hollow semicylinder 18 is shaped so as to present the following elements.

In correspondence of the extremities, there are provided semiannular ribs 21 having a form that is complementary to that of the hollows 15 made in the cables' insulations 10 and 11.

Moreover, there are also present two semicylindrical reliefs 22 having flat bases, that are provided in the central position of their surface 23, with a semi-circular aperture 24, that is apt for allowing after the assembling together of the semicylinders 18, a through-opening, whose diametral dimensions are equal to the outer dimensions of the cables' conductors 8 and 9.

The distance, existing between the non-facing surfaces of the semicylindrical reliefs 22, is equal to the distance that exists between the facing surfaces 25 of the insulations 10 and 11 of the two cables. In this manner, the central tract of the cylindrical body 17 carries out the functions of the adaptor and the semicylindrical reliefs 22 are in contact with the cables' insulations 10 and 11 and enclose the welding 14 in a cavity 26 between them.

Instead, the end portions 27 of the semicylinders 18 constitute the mechanically resistant elements, and they are embedded into the outer surface of the cables' insulations 10 and 11, with filling the lowered tracts 15 of these latter. Moreover, their ribs 21 are inserted into the annular hollows 16 of the cables' insulations.

Moreover, the dimensions in the longitudinal direction to the joint found at the end portions 27 of the semicylinders 18 which constitute the mechanically resistant elements through which the anchoring of the cables' insulations to the metallic adaptors is realized, are such as to allow them to result as being in contact with the deflector 5 of the monolithic sleeve 1, and also underlying it.

From the previously given description of an embodiment of a joint according to the invention, as well as from the considerations that will follow, it can be understood how through this joint the proposed aims have been achieved.

The presence, in a joint according to the invention, of mechanical anchorings inbetween the cables' insulations and the adaptor, allows for giving place to a mechanical continuity between these elements.

This mechanical continuity, in preventing any shrinking from occurring in the insulations in correspondence of the ends of the cables, obviates the previously described phenomenon connected with such shrinkings and hence, also the drawbacks which are originated.

As a consequence, not only has it been rendered possible to now realize joints in the high voltage cables sector, but the reliability of the joints used for medium and low voltage cables, is also increased.

## Claims

1. Joint for extruded insulation cables of the type comprising a monolithic sleeve (1), provided with a semiconductive deflector (5) facing its own through-cavity, fitted and tightened on the cables' insulation ends and on a metallic adaptor interposed between them, the said sleeve circumscribing the end-to-end connection of the cable conductors (8, 9), characterized by the fact that mechanical anchorings (27) underlying and entirely in contact with the deflector (5) of the sleeve (1), fix the metallic adaptor (17) to the insulations (10, 11) of the cables.

2. Joint according to Claim 1, characterized by the fact that the mechanical anchorings comprise at least one mechanically resistant element (27), cantilevered from each base of the adaptor, directed according to the cable's axis and embedded inside the cable's insulation, said element being provided with at least one rib (21) that is insertable into a complementary-shaped hollow (16), present in said cables' insulation (10, 11).

3. Joint according to Claim 1, characterized by the fact that the assembly of the metallic adaptor and of the mechanically resistant elements (27) cantilevered from its bases, is a tubular cylindrical body (17) formed by two semicylinders (18), the outer surface (20) of each semicylinder being smooth, while their inner surface presents a semiannular rib (21) at each extremity and two semicylindrical reliefs (22), with a semicircular aperture (24) that, successive to the joining together of the two semicylinders, creates a through-opening, the non-facing surfaces of the semicylindrical reliefs being in contact with the facing surfaces (25) of the cables' insulations (10, 11).

## Patentansprüche

1. Verbindung für Kabel mit einer extrudierten Isolation derjenigen Art, die eine monolithische Hülse (1) aufweist, die mit einem ihrem Durchgangshohlraum zugewandten halbleitenden Deflektor (5) versehen und an den Isolationsenden der Kabel und an einem metallenen Adaptor, der zwischen diesen angeordnet ist, angebracht und festgelegt ist, wobei die Hülse die Ende- an-Ende-Verbindung der Kabelleiter (8, 9) umgibt, dadurch gekennzeichnet, daß mechanische Verankerungen (27) die unter dem Deflektor (5) der Hülse (1) liegen und vollständig mit diesem in Berührung stehen, den metallenen Adaptor (17) an den Isolationen (10, 11) der Kabel festlegen.

2. Verbindung nach Anspruch 1, dadurch gekennzeichnet, daß die mechanischen Verankerungen wenigstens ein mechanisch widerstandfähiges Element (27) aufweisen, welches von jeder Basis des Adaptors frei vorragt, in Achsrichtung des Kabels gerichtet und in die Kabelisolation eingebettet ist, wobei das element mit wenigstens einer Rippe (21) versehen ist, die in einer koplementär gestalteten Hohlraum (16) eingesetzt werden kann, der in der Kabelisolation (10, 11) vorhanden ist.

3. Verbindung nach Anspruch 1, dadurch gekennzeichnet, daß das Gebilde aus dem metallenen Adaptor und den mechanisch widerstandsfähigen Elementen (27), die von den Basen des Adaptors frei vorragen, ein rohrförmiger zylindrischer Körper (17) ist, der durch zwei Halbzylinder (18) gebildet ist, wobei die Außenfläche (20) jedes Halbzylinders glatt ist, während ihre Innenfläche eine halbringförmige Rippe (21) an jedem Ende und zwei halbzylindrische Vorsprünge (22) mit einer halbkreisförmigen Öffnung (24) darbieten, die nach dem Verbinden der beiden Halbzylinder miteinander eine druchgehende Öffnungen bilden, wobei die einander nicht zugewandten Flächen der halbzylindrischen Vorsprünge sich in Berührung mit den einander zugewandten Flächen (25) der Kabelisolationen (10, 11) befinden.

## Revendications

1. Joint pour câbles d'isolation extrudés du type comprenant un manchon monolithique (1), pourvu d'un déflecteur semiconducteur (5) dirigé vers sa propre cavité traversante, monté et serré sur les extrémités d'isolation des câbles et sur un adaptateur métallique interposé entre elles, ledit manchon circonscrivant la liaison bout-à-bout des conducteurs de câbles (8, 9), caractérisé par le fait que des ancrages mécaniques (27) situés en dessous et entièrement en contact avec le déflecteur (5) du manchon (1), fixent l'adaptateur métallique (17) sur les isolations (10, 11) des câbles.

2. Joint selon la revendication 1, caractérisé par le fait que les ancrages mécaniques comprennent au moins un élément mécaniquement résistant (27), disposé en porte-à-faux à partir de chaque base de l'adaptateur, dirigé selon l'axe des câbles et noyé à l'intérieur de l'isolation des câbles, ledit élément étant pourvu d'au moins une nervure (21) qui peut être insérée dans une cavité de forme complémentaire (16), existant dans ladite isolation de câbles (10, 11).

3. Joint selon la revendication 1, caractérisé par le fait que l'assemblage de l'adaptateur métallique et des éléments mécaniquement résistants (27) exposés en porte-à-faux à partir de leurs bases, est un corps cylindrique tubulaire (17) formé par deux demi-cylindres (18), la surface extérieure (20) de chaque demi-cylindre étant lisse, tandis que leurs surfaces intérieures comportent une nervure demi-annulaire (21) à chaque extrémité et deux dégagements demi-cylindriques (22), avec une ouverture demi-circulaire (24) qui, après la jonction des deux demi-cylindres ensemble, crée une ouverture de traversée, les surfaces non correspondantes des dégagements demi-cylindriques étant en contact avec les surfaces correspondantes (25) des isolations de câbles (10, 11).

Fig. 1

Fig. 2

0 199 742